# EUROPEAN PATENT APPLICATION

(11) **EP 4 723 065 A2**
(43) Date of publication of application: **08.04.2026**
(21) Application number: 25206250.0
(22) Date of filing: 02.10.2025
(51) Int. Cl.: G07C 5/00, G07C 5/08, G08G 1/054

(54) **SYSTEM AND PROCESS FOR RECORDING EVIDENTIARY DATA**

(30) Priority: 02.10.2024 IT 202400021822
(71) Applicant: SMART AI Srl, 50053 Empoli (FI) (IT)
(72) Inventor: CECIO, Davide, 50053 Empoli (IT)
(74) Representative: Lunati & Mazzoni S.r.L.

(57) **Abstract**

A computer-implemented process of recording evidentiary data is provided, comprising: allocating a storage space for digital evidentiary data within a physical memory present on a recording device and isolated from the outside of the device; acquiring the evidentiary data following the detection of a predetermined event; recording the evidentiary data in the storage space; associating with the evidentiary data digital certification data including at least a date and a time of acquisition corresponding to the date and time of the acquisition of the evidentiary data, that is, the date and time of the occurrence of the predetermined event; sending via encrypted communication means exclusively the certification data to a storage environment external to the device and accessible by at least one user external to the device; and storing the certification data in the storage environment in such a way as to enable at least said external user to view the certification data subsequent to the acquisition of the evidentiary data.

## Description

The present invention relates to a system and process for recording evidentiary data of the type specified in the preamble of the first claim.

In particular, the present invention relates to a system and process for recording evidentiary data relating to road vehicles and implementable both on moving vehicles and on fixed devices such as, for example, speed cameras.

As is known, common road vehicles such as, for example, automobiles comprise onboard systems adapted to record information in the event of accidents.

A system particularly used in the automotive sector is the event data recorder, also known by the acronym EDR (Event Data Recorder).

The EDR substantially records information relating to the accident that can be collected after the accident and analysed to determine what the vehicles did before, during and after the event.

Therefore, the EDR defines a simple tamper-resistant closed system equipped with a read-write memory similar to the black box found in airplanes.

The known technique described includes some significant drawbacks.

In particular, the EDR system is closed and, therefore, does not allow communication of its data to the outside. The latter, therefore, remain recorded in the EDR memory and can be made accessible only after the event that activates the EDR, such as an accident. This means that, although the EDR is theoretically tamper-proof, the data contained therein could instead be manipulated between the event and the consultation without leaving a trace. Therefore, third-party entities such as, for example, an insurance company can hardly be truly certain of the veracity of the data contained therein.

Furthermore, almost always, third-party entities are owners of data storage systems which are themselves closed systems and cannot communicate in real time with the EDR during the steps of occurrence of the event.

In this situation, the technical task underlying the present invention is to devise a system and process for recording evidentiary data capable of substantially overcoming at least part of the above-mentioned drawbacks.

Within the scope of said technical task, an important object of the invention is to achieve a system and process for recording evidentiary data that makes it possible to certify the veracity of the evidentiary material associated with the evidentiary data in order to ensure that the material is reliable, for example if consulted by a third-party entity such as an insurance company or a judicial authority.

Another important object of the invention is to implement a system and process for recording evidentiary data that is compatible with the systems currently commonly in use onboard vehicles or on terrestrial devices such as speed cameras, in particular integrating with the closure of the systems without having to create breaches within the security systems.

The technical task and the specified objects are achieved by a system and process for recording evidentiary data as claimed in the annexed claim 1.

In the present document, the measurements, values, shapes and geometric references (such as perpendicularity and parallelism), when associated with words such as "about" or other similar terms such as "approximately" or "substantially", are to be understood as subject to measurement errors or inaccuracies due to production and/or manufacturing errors and, above all, subject to a slight deviation from the value, measurement, shape or geometric reference with which they are associated. For example, such terms, if associated with a value, preferably indicate a deviation not greater than 10% of the value itself.

Furthermore, when used, terms such as "first", "second", "upper", "lower", "main" and "secondary" do not necessarily identify an order, a priority of relationship or relative position, but may simply be used to more clearly distinguish between different components.

Unless otherwise specified, as appears from the following discussions, it is considered that terms such as "processing", "computing", "determination", "calculation", or the like, refer to the action and/or processes of a computer or similar electronic computing device that manipulates and/or transforms data represented as physical quantities, such as electronic quantities of registers of a computer system and/or memories into other data likewise represented as physical quantities within computer systems, registers or other storage, transmission or display devices.

The measurements and data reported in this text are to be considered, unless otherwise indicated, as carried out in International Standard Atmosphere ICAO (ISO 2533:1975).

The process for recording evidentiary data according to the invention is adapted to enable the certification of said evidentiary data. However, the process does not directly manipulate the evidentiary data, but intervenes in the certification as described hereinafter.

The evidentiary data are data of any kind, preferably digital, useful for example to institutions to resolve a situation of uncertainty or conflict preferably, but not necessarily, in the automotive field.

The evidentiary data are, in fact, preferably digital images or videos. They may be, for example, data from recordings or photographs taken inside the cabin of a vehicle, or photographs taken by fixed roadside devices, for example speed cameras.

The process comprises, in general terms, an allocation step. In the allocation step, a storage space is allocated within a physical memory. The storage space is substantially a space adapted to allow the storage of digital evidentiary data. The physical memory may, therefore, consist of a hard-disk or an SSD.

In general, the physical memory is preferably present on a recording device. The recording device comprises at least one processing unit, adapted to coordinate the different steps of the process, and an acquisition module arranged to detect the evidentiary data through sensors or cameras. The processing unit may be implemented by means of a high-performance microprocessor or microcontroller, optionally supported by dedicated coprocessors for specific tasks such as real-time video processing, data encryption or analysis of signals from sensors. It is responsible for the management of data flows, time synchronisation between multiple sources and supervision of the correct functioning of the subsystems, ensuring the integrity of the recording process.

The acquisition module, in turn, may include sensors of various kinds - for example high-resolution cameras, directional microphones, motion sensors, LIDAR or environmental sensors - each of which is configured to sample the data with frequencies and resolutions appropriate to the specific evidentiary needs. The acquired data are generally time-stamped by means of an internal clock or an external timestamping system to ensure traceability and legal validity of the recordings.

The device further comprises a physical memory management module, configured to control the writing operations and to ensure that the stored data are not accessible from the outside without authorisation. Said module may include hardware encryption functionalities, access permission management and anti-tampering protections, such as the use of write-once memories or recording on encrypted media with keys internal to the processing unit. Conceptually, the memory management module may be extended to include data redundancy and backup algorithms, optimised compression systems to reduce the required storage space, and automatic data integrity verification mechanisms using checksums or digital signatures.

More in detail, the recording device may be integrated into a modular architecture, wherein each module (acquisition, processing, memory, user interface) communicates through secure buses or encrypted communication protocols. This allows the system to be scaled, adding additional sensors or acquisition channels without compromising the overall data integrity. Furthermore, onboard artificial intelligence algorithms may be implemented for data pre-processing, such as automatic object recognition, noise filtering or signal classification, thereby reducing the post-processing load and increasing the reliability of the recorded information.

Conceptually, the device may be further extended to interact with secure network systems, enabling data transmission to remote or certified cloud servers, always maintaining traceability and anti-tampering protection, thus creating an end-to-end data collection and management ecosystem compliant with regulatory requirements and advanced security standards.

More in detail, the recording device may, for example, consist of an EDR system onboard a vehicle. Alternatively, the recording device may consist of a roadside speed control device, for example a common speed camera.

In any case, preferably, the physical memory is isolated from the outside of the device. In this way, the physical memory proves to be inaccessible from the outside. Thus, the process comprises an acquisition step.

In the acquisition step, preferably, the evidentiary data are acquired. The acquisition may, for example, be performed by optical or thermal acquisition means. More in detail, in fact, the acquisition may be performed by optical or thermal cameras.

In further embodiments, the acquisition may also comprise other types of sensors, such as radar, LIDAR, microphones, accelerometers or environmental sensors, adapted to detect physical, acoustic or motion parameters useful for constituting digital evidentiary data. The integration of multiple types of sensors allows the system to operate in complex contexts, such as indoor and outdoor environments, low visibility conditions or dynamic situations. The data from each sensor may be temporally synchronised and pre-processed through dedicated algorithms to improve accuracy and reliability. Thanks to this modularity, the device is adaptable to different application scenarios, such as security, industrial monitoring, smart mobility or environmental surveillance, and is not limited to image acquisitions only, thus expanding the possibilities of collecting and analysing digital evidence.

The acquisition is also preferably carried out following the detection of a predetermined event. The predetermined event is defined as a condition that determines the automatic activation of the system, and is configurable according to the specific application. Said event may consist of an anomalous condition of the vehicle, of an environmental parameter detected by sensors, of sudden changes in pressure, temperature or vibrations, or of the exceeding of preset thresholds on any monitored signal. The event may be detected by one or more sensors in combination, with conditional activation logic or based on real-time data analysis algorithms. In this way, the invention generalises the activation of the system, ensuring flexibility and adaptability, keeping it independent from the single application context and allowing use in different scenarios without the need for hardware reconfigurations. Therefore, the predetermined event may be given, for example, by an accident, rather than by the exceeding of a predetermined speed limit.

In application variants, the predetermined event may also include environmental or operational conditions, such as sudden decelerations, abrupt changes of trajectory, unauthorised openings of accesses, or other signals detected by onboard sensors or by external control devices. Such events may be combined with one another through threshold logics or correlation algorithms to increase the reliability of detection. The system may also integrate filters and pre-processing algorithms to distinguish between significant events and background noise. In this way, the automatic activation proves to be more precise and contextualised to actual operating conditions, improving the safety and traceability of the data collected.

The detection of such predetermined events may be carried out with sensors or other technologies extremely common in automotive vehicles, for example adapted to enable the activation of airbags or other similar devices.

Therefore, the sensors that enable the detection, as well as the processors that receive the signals and activate other devices in response, are devices per se known to the person skilled in the art and do not require particular description. The process further comprises a recording step.

In the recording step, the evidentiary data are recorded in the storage space. Also in this case, technologies already known in the automotive field may be used, for example EDR systems onboard said vehicles or black boxes or recording systems present on common speed cameras.

In further applications, the system may be used to record and certify evidentiary data acquired from video surveillance systems in public areas, from industrial devices for process monitoring, or from access control systems, also ensuring in such contexts the verifiability of the data collected. Thanks to encryption and timestamping mechanisms, the data remain protected from unauthorised access and tampering. Furthermore, the modular architecture of the system makes it easy to integrate new information sources, extending its applicability to different scenarios without compromising the integrity of the recordings. However, the process comprises further steps.

In fact, the process also comprises an association step. In the association step, advantageously, digital certification data are associated with the evidentiary data. The certification data are substantially data that can certify the validity of the evidentiary data for a consultation subsequent to the recording.

In particular, preferably, the certification data comprise at least a date and a time of acquisition. Furthermore, the certification data may also comprise a unique identifier generated by means of one-way cryptographic algorithms, preferably hash functions or equivalents, which allow the evidentiary data to be permanently linked to the certificate without directly including the evidentiary content. The system generates such certification data through a specific module, configured to associate with each evidentiary data at least a time reference and a unique identifier. The unique identifier may be calculated using standard cryptographic hash functions, such as SHA-256 or similar, ensuring resistance to collisions and unauthorised modifications. The module may also include integrity checks, automatic verifications and recording of associated metadata. In this way, each certificate becomes secure and verifiable digital evidence, while keeping the original content of the data separate. This architecture ensures traceability, immutability and protection of evidentiary data even in complex or distributed contexts. The date and time of acquisition may be determined by using, for example, the clock of a common electronic processor, possibly the same processor that controls the EDR or another processor present onboard the vehicle or the roadside device.

In a preferred embodiment, the generation of time references may be carried out by means of certified synchronisation systems, such as NTP protocols or time signals distributed by satellite networks, so as to ensure that the recorded time is verifiable also by external entities. Such systems may be integrated with dedicated hardware modules, such as GPS receivers or certified clocks, which provide an additional level of precision and reliability. Furthermore, the time references may be digitally signed to prevent subsequent alterations. In this way, each evidentiary data is anchored to a robust and legally enforceable time trace. In any case, the date and time of acquisition correspond to the date and time of execution of the acquisition step and, therefore, to the date and time of the occurrence of the predetermined event.

This means that the certification data do not comprise, by themselves, evidentiary data, but only data that allow associating, and therefore linking, the evidentiary data to the certification data. In this respect, the latter may comprise a unique identification code, for example a Hash code or the like.

Advantageously, the process also comprises a sending step.

In the sending step, the process comprises sending exclusively the certification data via encrypted communication means to a storage environment.

The encrypted communication means are, for example, constituted by one or more of blockchain, VPN, and end-to-end encryption or other similar systems. The secure communication channel is exclusively dedicated to the transmission of the certification data and may use standard protocols such as TLS or IPsec, applicable to various network architectures, in any case ensuring the confidentiality and integrity of the information transferred. In general, the process provides that the transfer of the certification data takes place exclusively via a secure channel established by the communication module of the system, which may integrate public key authentication mechanisms and automatic management of digital certificates. Said dedicated channel reduces the risk of interception or alterations and ensures the evidentiary validity of the information even in distributed scenarios or with heterogeneous network infrastructures.

The storage environment is distinct from the physical memory. Said storage environment may be implemented as a remote server, private cloud infrastructure or distributed system on blockchain nodes, and is organised to maintain an indexed register of the certification data, including time references and unique identifiers, so as to allow subsequent verification by authorised users. The external storage environment is conceived as an independent logical structure, arranged to receive, store and protect the certification data by means of redundancy and encryption mechanisms. It may adopt different configurations, from a centralised server to a distributed system on several nodes, thus ensuring scalability and resilience against faults or tampering. The indexed register is updated in a transactional manner, so as to ensure consistency and immutability of the recorded information. In this way, each verification by authorised external subjects is traceable, secure and enforceable in legal or procedural contexts.

Therefore, the storage environment is preferably and advantageously external to the recording device. Furthermore, the storage environment is preferably accessible by at least one user external to the recording device.

In further configurations, the storage environment may be organised with redundancy or replication mechanisms on multiple nodes, so as to ensure the availability of the certification data even in case of failures or malfunctions of a single storage unit.

The external user may be constituted, for example, by an insurance entity or a judicial authority, in general any user tasked with consulting the evidentiary data and who needs to verify the certainty of the evidentiary data. Access to the storage environment by external users is preferably regulated by authentication and authorisation mechanisms, comprising digital credentials, electronic certificates or multi-factor systems, so as to ensure that consultation is allowed exclusively to qualified subjects. The infrastructure may integrate identity management protocols (IAM) and centralised revocation systems to prevent unauthorised use. Preferably, each access is recorded in a detailed system log, comprising date, time, credentials used and type of operation carried out, so as to allow complete traceability of the activities. The logs themselves may be digitally signed to prevent unauthorised alteration or deletion. Furthermore, the environment may implement periodic auditing checks and automatic alerts in case of anomalies in accesses. Such measures strengthen the evidentiary reliability of the data and ensure that each consultation is verifiable in legal or procedural contexts. In this way, the storage infrastructure maintains a high level of security, transparency and operational accountability. Naturally, the process also comprises a storage step.

In the storage step, the process stores the certification data in the storage environment. Thus, the process enables at least the external user to view the certification data following the acquisition of the evidentiary data. In practice, the external user may recalculate an identifier from the evidentiary data made available by the recording device and compare it with the one stored in the external environment; the correspondence between the two values represents an objective guarantee of the absence of alterations of the evidentiary data after their recording. Therefore, the external user, by consulting the stored certification data, may verify their correspondence with the original evidentiary data by autonomously recalculating an identifier and comparing it with the stored one. The identity of the two values represents an objective guarantee of the absence of manipulations on the recorded evidentiary data. In application variants, the storage of the certification data may comprise long-term archiving mechanisms, such as periodic renewal of digital signatures, data migration to updated media or replication on distributed nodes, so as to preserve the validity and reliability of the information even in the long term. Furthermore, continuous monitoring systems may be implemented to verify the integrity of the archives and promptly report any anomalies so as to preserve their validity even in case of technological evolution.

Preferably, but not necessarily, the process also comprises a deletion step. If present, in the deletion step, the process comprises deleting the certification data present in the storage environment. In particular, advantageously, the deletion is carried out if the certification data have not been viewed by at least one user for a predetermined consultation period.

In this way, it is ensured that the evidentiary data may be certified by the certification data for a useful period, without however unnecessarily burdening the storage environment with useless certification data.

The deletion of data is preferably carried out through secure procedures, comprising overwriting techniques or equivalents, suitable to prevent the subsequent recovery of the deleted certification data. It is specified that such deletion capability concerns exclusively the data stored locally on the recording device or on temporary memories associated therewith. As for the data recorded on distributed blockchain-type registers, they cannot be technically deleted, but may only be marked or declared obsolete, in order to preserve their immutability and at the same time ensure the historical traceability and enforceability against third parties of the recordings made. As already mentioned, the entire process just described is preferably implemented by a computer or electronic processor.

Therefore, the invention also enables the implementation of a new system for recording evidentiary data. The system comprises means for implementing the process according to the invention.

Thus, for example, if the evidentiary data are digital images or videos, preferably the system comprises one or more optical or thermal cameras.

Furthermore, the system may be integrated within different types of devices.

For example, the invention enables the implementation of a new vehicle comprising the system according to the invention.

In this case, preferably, the recording device is constituted by an EDR system onboard the vehicle itself.

Therefore, the predetermined event may be constituted by an accident and, consequently, the evidentiary data may be constituted by one or more frames relating to the inside and/or outside of the vehicle.

For example, the system may be configured to acquire frames of a user positioned in the driving seat of the vehicle to verify whether the user's behaviour was compliant with traffic rules or the like.

Alternatively, the invention may enable the implementation of a new roadside speed control device, for example a speed camera, comprising the system according to the invention.

In this case, preferably, the roadside device constitutes the recording device. Therefore, the predetermined event may be constituted by the exceeding of a predetermined speed limit, for example an urban speed limit, by a vehicle in transit near the device. Therefore, the evidentiary data may be constituted by one or more frames relating to the transiting vehicle, so as to record the registration plate of the vehicle itself.

Since the process is implemented by computer, preferably the invention also comprises a new computer program and a new storage medium.

In particular, the invention also comprises a computer program including instructions which, when the program is executed by the processor, enable the processor to execute the process according to the invention.

The computer program is structured in distinct software modules, comprising at least an event detection module, an evidentiary data acquisition module, a certification module, a secure transmission module and a management module for the isolated physical memory. Such modules may reside in the same device or be distributed between the recording device and the external storage environment, communicating by means of standard protocols and secure channels. Each module is preferably independent and provided with defined interfaces, so as to ensure scalability, updatability and interoperability of the system. The computer program may be implemented in different languages and environments, executable on resource-constrained embedded systems, on mobile devices or on remote servers, maintaining unchanged the logical sequence of the steps. In application variants, the modules may be enriched with artificial intelligence algorithms for the automatic analysis of evidentiary data or with internal auditing functions. Such modular architecture ensures the correct separation of functions, reduces the risk of vulnerabilities and allows the evolution of the system without compromising the consistency of the certification process. In conclusion, the invention also comprises a computer-readable storage medium comprising instructions which, when executed by the processor, enable the processor to execute the process according to the invention.

The system and process for recording evidentiary data according to the invention achieve important advantages.

In fact, the system and process for recording evidentiary data enable the certification of the veracity of the evidentiary data to ensure their reliability, for example if consulted by a third-party entity such as an insurance company or a judicial authority.

In particular, the system implements a functional separation between the evidentiary data and the certification data, ensuring that the two sets of information follow different channels and management logics. This separation provides the advantage that the evidentiary data remain stored locally in the isolated physical memory and are not transmitted externally, thereby reducing the risk of dissemination of sensitive information or unauthorised access. The certification data, transmitted separately and stored in an external environment, instead ensure the possibility of verifying the integrity of the evidentiary data without having to manipulate or duplicate them. This results in increased overall system security, since any alteration of the evidentiary data could not be coherently replicated in the certification data already archived, making any attempt at falsification immediately detectable.

A further advantage lies in the reduction of network and storage load, since the certification data are much smaller in size compared to the evidentiary data and can therefore be transmitted and stored efficiently, even in resource-constrained contexts.

Moreover, the presence of the certification data in an external environment allows authorised third parties to carry out independent verifications through simple cryptographic comparisons, without the need to directly access the original data.

In this way, the system ensures an optimal balance between integrity, confidentiality and efficiency, resulting in compatibility with different application scenarios and easily integrable with existing infrastructures. In conclusion, the system and process for recording evidentiary data are compatible with the systems currently commonly in use onboard vehicles or on terrestrial devices, such as speed cameras. In particular, in fact, the system and process for recording evidentiary data are not hindered by the need to act as an interface between different closed systems with which they must communicate, and they integrate with them without having to create breaches within the security systems.

The invention is susceptible to variants falling within the scope of the inventive concept defined by the claims.

Within this scope, all details may be replaced by equivalent elements and the materials, shapes and dimensions may be any.

## Claims

1. Computer-implemented process of recording evidentiary data including:
- allocating storage space for digital evidentiary data within a physical memory present on a recording device and isolated from the outside of that device;
- acquiring said evidentiary data following the detection of a predetermined event;
- recording said evidentiary data in said storage space;
and **characterised in that** it further comprises:
- associating said evidentiary data with digital certification data including at least a date and time of acquisition corresponding to the date and time of the implementation of said acquisition, that is, the date and time of the occurrence of said predetermined event;
- sending via encrypted means of communication exclusively said certification data to a storage environment external to said device and accessible by at least one user external to said device;
- storing said certification data in said storage environment in such a way as to enable at least said external user to view said certification data subsequent to said acquisition of said evidentiary data.

2. Process according to claim 1, further comprising deleting said certification data in said storage environment if said certification data has not been viewed by said at least one user for a predetermined consultation time period.

3. Process according to any of the preceding claims, wherein said means of communication consists of one or more of blockchain, VPN, and end-to-end encryption.

4. Process according to any of the preceding claims, wherein said evidentiary data are digital images or videos.

5. System for recording evidentiary data comprising means for implementing a process according to any of the preceding claims.

6. System according to the preceding claim comprising means for implementing a process according to claim 4 including one or more optical or thermal cameras.

7. Vehicle comprising a system according to any of claims 5-6, wherein said recording device is constituted by an EDR system onboard said vehicle, said predetermined event is constituted by an accident, and said evidentiary data are constituted by one or more frames relating to the inside and/or outside of said vehicle, in particular of a user positioned in the driving seat of said vehicle.

8. Roadside speed control device comprising a system according to any of claims 5-6, wherein said roadside device constitutes said recording device, said predetermined event is constituted by the exceeding of a predetermined speed limit by a vehicle in transit in proximity to said device, and said evidentiary data are constituted by one or more frames relating to said vehicle in transit.

9. Computer program comprising instructions which, when said program is executed by said processor, enable said processor to perform a process according to any of claims 1-4.

10. Computer-readable storage medium comprising instructions which, when executed by said processor, enable said processor to perform a process according to any of claims 1-4.
